(19) **Europäisches Patentamt / European Patent Office / Office européen des brevets**

(11) **EP 4 239 546 B1**

(12) **EUROPEAN PATENT SPECIFICATION**

(45) Date of publication and mention
of the grant of the patent:
**25.02.2026 Bulletin 2026/09**

(21) Application number: **23152874.6**

(22) Date of filing: **23.01.2023**

(51) International Patent Classification (IPC):
***G06Q 10/08*** *(2024.01)* ***G06Q 10/087*** *(2023.01)*
***G06Q 10/04*** *(2023.01)*

(52) Cooperative Patent Classification (CPC):
**G06Q 10/08; G06Q 10/04; G06Q 10/087**

(54) **SYSTEM AND METHOD FOR ASSET TRACKING**

SYSTEM UND VERFAHREN ZUR ANLAGENVERFOLGUNG

SYSTÈME ET PROCÉDÉ DE SUIVI D'ACTIFS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.03.2022 US 202217686170**

(43) Date of publication of application:
**06.09.2023 Bulletin 2023/36**

(73) Proprietor: **Transportation IP Holdings, LLC
Norwalk, CT 06851 (US)**

(72) Inventors:
• **Paul, Anthony D.
Norwalk, CT 06851 (US)**
• **Mathur, Ankit
Norwalk, CT 06851 (US)**

(74) Representative: **Novagraaf Group
Chemin de l'Echo 3
1213 Onex / Geneva (CH)**

(56) References cited:
**WO-A1-2017/127743 US-A1- 2021 142 268**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Technical Field.

The present disclosure relates generally to systems and methods for asset tracking.

Discussion of Art.

In supply chains and transportation systems, estimating the location of specific assets such as cargo, vehicles, multi-vehicle systems, or the like, may be needed to provide accurate inventories, tracking information, and estimated arrival times. Currently, to determine the location of a given asset, a positioning device may be needed to be attached to the asset (e.g., Global Navigation Satellite System, or GNSS, receivers) and/or external observations may need to be made, such as by wayside or offboard cameras. In each case, the attached positioning device or external observation device reports a current or last know location of one or more assets.

However, these types of asset tracking systems and methods require permeation or saturation of the extra attached devices and/or external devices for scaled usefulness, thus limiting the practical implementation. For example, to track a specific vehicle in a given fleet of vehicles, a positioning device may need to be installed on every vehicle to determine the location of any specific vehicle. Similarly, within a network using wayside devices, such as wayside or offboard cameras, the wayside or offboard devices may need to be installed with visibility of the entire network to observe current locations of assets within any given portion of the network.

It may be desirable to have a system and method that differs from those that are currently available. US 2021/142268 A1 describes directly tracking the mobile assets based on the analysis of image data of the target mobile assets. WO 2017/127743 A1 describes cloud-based Bluetooth Low Energy (BLE) systems for asset management.

BRIEF DESCRIPTION

In accordance with one example or aspect, a method is provided that includes tracking one or more related assets to estimate an asset location and assigning a confidence score for the estimated asset location. The method may include identifying one or more relationships between a tracked asset and one or more related assets then obtaining one or more reported locations of the one or more related assets and one or more timestamps at which the one or more reported locations of the one or more related assets were determined. The method may include estimating an asset location of the tracked asset based on the one or more reported locations of the one or more related assets and determining or calculating a confidence score for the asset location that is estimated based on the one or more relationships between the tracked asset and the one or more related assets, the one or more timestamps at which the one or more reported locations were determined, and a quantity of the one or more related assets for which the one or more reported locations were obtained. The method also may include communicating the asset location that is estimated and the confidence score that is calculated for monitoring movement of the tracked asset.

In accordance with one example or aspect, an asset tracking system is provided that includes a controller that may identify one or more relationships between a tracked asset and one or more related assets. The controller may obtain one or more reported locations of the one or more related assets and one or more timestamps at which the one or more reported locations of the one or more related assets were determined. The controller may estimate an asset location of the tracked asset based on the one or more reported locations of the one or more related assets. The controller may calculate a confidence score for the asset location that is estimated based on the one or more relationships between the tracked asset and the one or more related assets, the one or more timestamps at which the one or more reported locations were determined, and a quantity of the one or more related assets for which the one or more reported locations were obtained. The controller may communicate the asset location that is estimated and the confidence score that is calculated for monitoring movement of the tracked asset.

In accordance with one example or aspect, an asset tracking system includes a controller that may receive information related to a tracked asset from one or more related assets. The information may include one or more reported locations of the related assets and one or more timestamps at which the reported locations were determined. The controller may identify one or more relationships between the tracked asset and the one or more related assets. The controller may estimate an asset location of the tracked asset based on the one or more reported locations of the related assets. The controller may calculate a confidence score for the asset location that is estimated based on the relationships between the tracked asset and the related assets, the one or more timestamps at which the one or more reported locations were determined, and a quantity of the one or more related assets for which the one or more reported locations were obtained. The controller may communicate the asset location that is estimated and the confidence score that is calculated for monitoring movement of the tracked asset.

BRIEF DESCRIPTION OF THE DRAWINGS

The subject matter may be understood from reading the following description of non-limiting embodiments, with reference to the attached drawings, wherein below:

FIG. 1 shows a schematic overview of one example of a transportation network and an exemplary asset tracking system;

FIG. 2 shows another schematic overview of one example of a transportation network and an exemplary asset tracking system;

FIG. 3 shows another schematic overview of an example of a transportation network and an exemplary asset tracking system;

FIG. 4 shows another schematic overview of an example of a transportation network and an exemplary asset tracking system;

FIG. 5 shows an exemplary embodiment of an asset tracking system; and

FIG. 6 shows an exemplary embodiment of an asset tracking method.

DETAILED DESCRIPTION

Examples of the subject matter described herein relate to an asset tracking system or a method of inferred location positioning and confidence scoring through asset relationships and worklists. To know the location of a tracked asset (e.g., any individual cargo, transportation vehicle, person, or other thing) moving within a network, the system may determine relationships between the tracked asset and one or more other assets, to then infer an estimated or best-known location of the tracked asset based on the position or observances of the other assets to which the tracked asset is related. For example, a railcar with an identification (ID) number 123 is expected to be part of a ten car railcar block with block ID 234. That block is expected to be a part of train ID 345. That train is expected to include two locomotive engines each with a unique ID (road numbers). That train is expected to be moved by a crew number and that crew may have identifying crew members.

The location of railcar ID 123 may not need to be tracked explicitly, in real-time with an attached device, or with constant observation (e.g., by a wayside camera). Instead, a collection of last known locations and observances of a combination of assets related to the tracked asset may be used to generate an estimated location of the tracked asset (e.g., railcar ID 123). For example, based on the location of a related locomotive engine from two hours ago, the current location of a mobile phone from a related crew member, and the last wayside observance of another railcar ID within the same railcar block as the tracked asset from thirty minutes ago, each of these imprecise observations can be used to calculate an approximated location and other information, such as expected arrival time at next place, along with any relevant confidence level scoring. (e.g., it is 75% certain railcar ID 123 is in location Y and will arrive at location Z in 15 minutes.)

It may also be that positioning or observation information contradicts expectations of relationships and "unsets" the relationship, thereby no longer referencing that relationship for positioning queries. Stated differently, the relationship between a tracked asset and another asset may no longer be reliable to indirectly track the location(s) of the tracked asset via the other asset. For example, a railcar may be "bad ordered" and taken out of service for being damaged. A railcar car may be bad ordered when the car is placed in a train in a position that contradicts a manifest, schedule, or the like. A trustworthy observer device (e.g., a camera, a radio frequency identification (RFID) reader, or the like) may observe the railcar block does not include the expected railcar ID 123 of the related asset being used to track locations of another tracked asset (e.g., a cargo container, another car, etc.), despite inventorying all other expected railcars in the ID of the railcar block. For example, each vehicle in a block of grouped vehicles may be scanned by the observer device to obtain an ID of each vehicle. The car that is the related asset to a tracked asset may have an ID that is not scanned or found in the block of grouped vehicles, even though the car is expected to be within that block or group of vehicles. Or an independent camera may observe railcar ID 123 in one geographic location at around the same time the related assets are observed in another geographic location and the physical distance between those two geographic locations is infeasible for transit between the two locations within the period of time between sampled observances. In either case, the asset tracking system is alerted to the expectation that the relationship between the tracked asset and the related asset is no longer valid for inferring positioning information.

Relationships also may be dissolved or discarded through planned or expected events. For example, the asset tracking system may receive work lists, trip plans, and the like, as input, with this input including one or more dissolution triggers that cause a relationship used to track locations of a tracked asset via another asset to no longer be used to track the tracked asset. This input may indicate that the railcar block is to be disbanded within a time period (e.g., twenty-four hours), with all railcars isolated from the block, the train, and the crew(s). At expiration of this time period (e.g., at the 24-hour mark), unless instructions are revised, the relationships may no longer be used to infer positioning information.

The asset tracking systems and methods described herein may identify relationships between a tracked asset and other related assets, and obtain reported locations and associated timestamps of the related assets. This information may be used to infer and estimate a location of the tracked asset. A confidence score may then be calculated for the estimated location based on the quantity and reliability of the information and relationships used. The information and relationships may include trip plans, a past or present location of related vehicles, a past or present location of a mobile device from a crew member, automatic equipment identification (AEI), a past or present wayside/offboard observation, work list information, among other relationships. While each input alone may be imprecise for determining a location of the tracked asset, the combination of the inputs can be used to calculate an approximated location and other information, such as expected arrival time, for example. Additionally, a relevant confidence level can be attributed to each approximated location based on the number and reliability of the inputs.

The confidence score for the approximated location may be calculated in several ways. One way may be by combining the confidence score associated with each input and a weighting factor associated with each input based on the reliability and recentness of the input. For instance, if the input is a wayside observation from two hours ago, this may have a lower confidence score than a current location reading from a mobile device of a crew member aboard a related asset.

While one or more embodiments are described in connection with a rail vehicle system, not all embodiments are limited to rail vehicle systems. Unless expressly disclaimed or stated otherwise, the subject matter described herein extends to other types of vehicle systems, such as automobiles, trucks (with or without trailers), buses, marine vessels, aircraft, unmanned aircraft (e.g., drones), mining vehicles, agricultural vehicles, or other off-highway vehicles. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

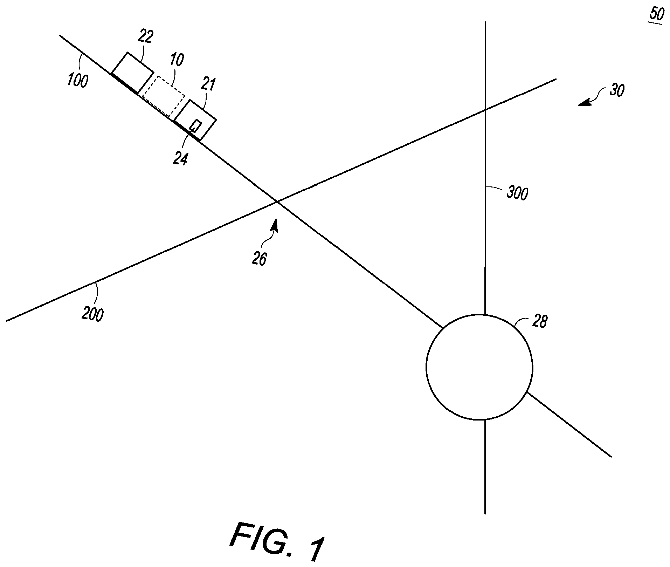

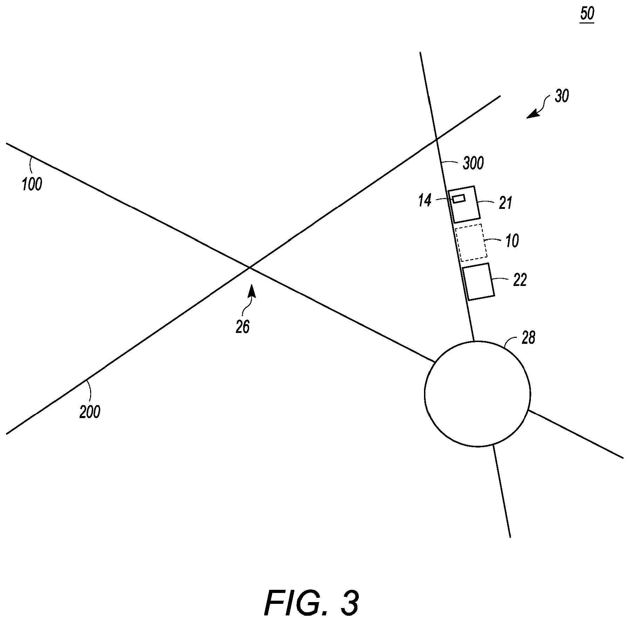

Figure 1 illustrates a schematic overview of one example of a transportation network and an exemplary asset tracking system 50. The embodiment illustrated in Fig. 1 shows an overview of a transportation network 30. The transportation network includes a plurality of routes 100, 200, 300 that are traversable by vehicles. These routes may represent tracks, roads, highways, paths, etc., on ground, in the air, on or in the water, etc. The asset tracking system can determine locations of a tracked asset 10 , such as a device carried as cargo or by a passenger, a cargo container, a vehicle, a group of two or more vehicles but less than an entire multi-vehicle system (e.g., a consist or subset of vehicles within a larger multi-vehicle system), etc. One or more related assets 20 also may be located and/or moving within the transportation network. In the embodiment illustrated in Figs. 1-4, the one or more related assets 20 include a first vehicle 21, a second vehicle 22, a device 24 capable of tracking location, an offboard observation post 26, and a transportation hub 28. These are provided only as a few examples of related assets. The tracked asset and the related asset(s) can be the same type of object (e.g., both assets can be cargo, cargo containers, vehicles, vehicle groups, etc.) or different types of objects. The asset tracking system can estimate a location of the tracked asset without requiring that the tracked asset be specifically tagged with a tracking device or otherwise have a location that is repeatedly provided by the tracked asset or a device attached to the tracked asset (e.g., a GNSS receiver). The asset tracking system can estimate locations of the tracked asset without having these locations reported to the asset tracking system from the tracked asset and/or a tracking device (e.g., GNSS receiver) attached to the tracked asset. Instead, the asset tracking system can identify relationships between the tracked asset (having potentially unknown or unreported locations) and one or more other assets (having known or reported locations) based on relationships between the tracked asset and the other asset(s). The asset tracking system can calculate a confidence score indicative of the strength or reliability of the estimated location of the tracked asset based on the relationship(s), as described herein.

The embodiment illustrated in Figs. 1-4 shows a schematic overview of the transportation network. In the embodiment illustrated in Figs. 1-4, the tracked asset is a vehicle. However, in other embodiments, the tracked asset may be a shipping container, cargo, electronic device, person, or the like. The related assets can be one or more items that may be associated with the tracked asset. In the embodiment illustrated in Figs. 1-4, the related assets may include the first vehicle, the second vehicle, the offboard observation post (such as a wayside observation camera), the tracking device (such as an RFID tag), and the transportation center. However, in other embodiments, the one or more related assets may include a mobile device location reading, a transportation work list, a forecasted route, a global positioning system (GPS) tracker, automatic equipment identification (AEI), personal observation, manually input information.

In one embodiment, the one or more related assets may include one or more of a mobile phone carried by a crew member of the first vehicle, a first multi-vehicle system that is planned to include the tracked asset, a vehicle block of two or more vehicles that are planned to remain together during travel in two or more different second multi-vehicle systems, a propulsion-generating vehicle, a non-propulsion-generating vehicle, a container carried by the tracked asset, or cargo carried in the container by the tracked asset.

The relationships between the tracked asset and the related assets may be determined based on a trip plan, a work list, a user input from an operator of a vehicle, an image from an offboard camera showing asset order, or the like. Locations of the related assets are then determined based on a past or present location reading from the related asset such as a GPS reading, a location reading from a mobile device aboard the related asset, a location input from an operator, a stationary offboard camera, or the like. The determined relationships and the determined locations may then be combined to infer an estimated location of the tracked asset. A confidence score is provided based on the expected accuracy and reliability of the determined relationships and the determined locations.

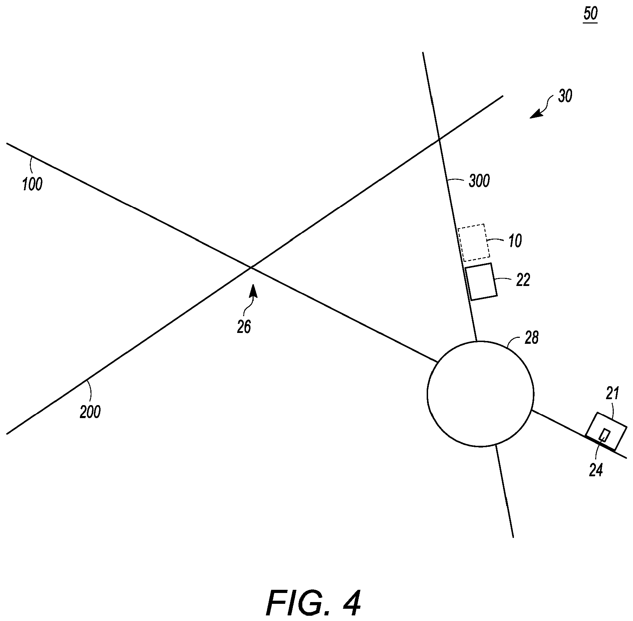

The asset tracking system may estimate a location of the tracked asset or target asset at a given time in the transportation network. In the embodiment shown in Fig. 1, the tracked asset is shown adjacent to the first vehicle and the second vehicle. Fig. 4 illustrates an exemplary embodiment of the asset tracking system, where the asset tracking system includes a controller 40 that compiles the information and identifies relationships between the tracked asset and the one or more related assets. The controller may be in communication with the tracked asset and the related assets such that the information is communicated between the tracked asset and the related assets and the controller. The one or more related assets may be a series of obj ective observances from agnostic, independent systems. The controller can represent hardware circuitry that includes and/or is connected with one or more processors (e.g., one or more integrated circuits, field programmable gate arrays, microprocessors, or the like) that perform the operations described herein in connection with the controller or asset tracking system.

The controller may obtain reported locations of the related assets along with timestamps at which the reported locations were determined. These locations and timestamps may be provided by the related assets and/or by sensors. The locations of the related assets may be determined by using one or both of onboard sensors or offboard sensors. The onboard sensors may include an RFID chip, a global positioning system (GPS), a global navigation satellite system (GNSS), or the like. The offboard sensors may include one or more cameras, an automatic equipment identification (AEI) system, a gate that vehicles pass through or by, an aerial vehicle, an RFID reader (that scans the RFID chip), or the like. The timestamps provide a temporal context for the reported location and the relevance of the location to the current or future location of the tracked asset.

Based on this information, the controller of the asset tracking system estimates the location of the tracked asset. The location of the tracked asset may be determined by:

1) Identifying the current location of a related assets known to be travelling with the tracked asset. In this case, the location of the related asset is the location of the tracked asset.

2) When there are several related assets having different location readings, the system may prioritize the related asset with the most recent timestamp to determine the location of the tracked asset. Prioritize may mean assigning more weight or influence to the asset with the most recent timestamp.

3) In one example, the location of a related asset having a greatest confidence score is the location used to estimate the location of the tracked asset. In another example, the location of a related asset having a confidence score greater than a predetermined threshold number is used as the location for the tracked asset.

4) In one example, a weighted average of the locations of one or more related asset is calculated to estimate the location of the tracked asset. The weighted average is based on the confidence scores of the one or more related assets. For example, more weight is given to the location of related assets with greater confidence scores.

Additionally, the asset tracking system may calculate a confidence score for the estimated location of the tracked asset based on the relationships between the tracked asset and the related assets, the timestamps at which the reported locations were determined, and a quantity of the related assets for which the reported locations were obtained. For example, the confidence score may be greater when the related asset and the tracked asset are required to travel together, such as when the tracked asset is cargo and the related asset is a cargo container in which the tracked asset is stored. Another example where the related asset and the tracked asset are required to travel together are when the tracked asset is a locomotive and the related asset is a mobile device of a crew member on the locomotive. The confidence score may be greater when the tracked asset and the related asset are scheduled to travel together over a stretch of route or time, and the location is still within that stretch of route or time. This relationship maybe determined based on a trip plan. The confidence score may be lower when the location is outside of this time or route.

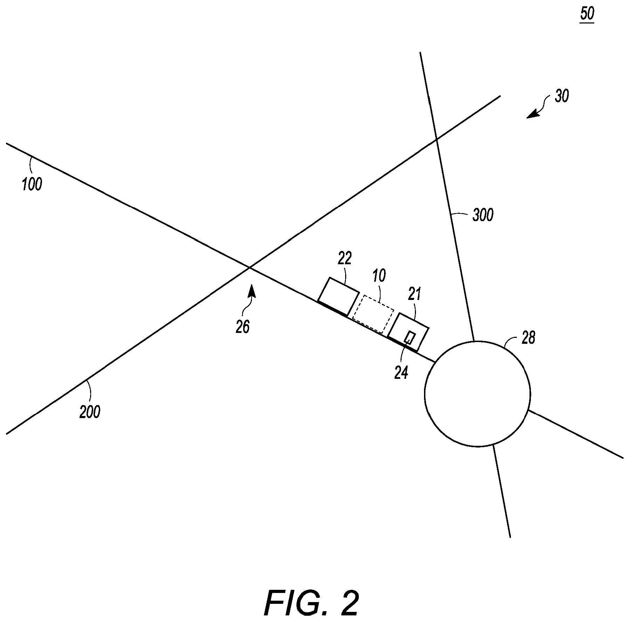

In one embodiment, the asset tracking system identifies a change in a relationship between a first related asset and the tracked asset, such as the first vehicle and the tracked asset. For example, the first relationship may initially be identified as the first vehicle and the tracked asset moving as one block for a given trip, as shown in Figs. 1 and 2. This block can be the two assets being mechanically or logically coupled and scheduled to travel together as or within this block for the trip. However, Fig. 4 shows a disruption in this relationship where the first vehicle and the tracked asset are split apart and are no longer moving as one block. The asset tracking system may then eliminate the first relationship from use in estimating the tracked asset location based on the disruption. Further, the confidence score may be updated (e.g., decreased) responsive to the identification of the disruption in the first relationship. In the embodiment illustrated in Figs. 1-4, the disruption may be identified by receiving a signal from the device such as the RFID tag inside the first vehicle indicating that the first vehicle is no longer moving together with the tracked asset. In other embodiments, the disruption may be identified by receiving a signal indicating that the tracked asset or the first vehicle is taken out of service, receiving inconsistent reported locations from the first vehicle and the tracked asset, determining that a scheduled trip of the first vehicle and the tracked asset has ended, or the like.

In one example, the tracked asset is placed onto a first vehicle. The first vehicle is connected to a second vehicle, with both the first vehicle and the second vehicle being a part of the same vehicle system. A first operator having a first phone is on the vehicle system. The locations of the first vehicle, the second vehicle, the vehicle system, and the first phone can be used as the location of the tracked asset with a high confidence score so long as the relationships remain intact.

However, there are events that may break the relationship and thus lower the confidence score. For example, the operator and the first phone leave the vehicle system at the end of a work shift. The location of the first phone is removed from the relationship and the confidence score may decrease based on the fewer location inputs.

A third vehicle may then join the vehicle system and this new relationship may be added to the asset tracking system, which may increase the confidence score. During a subsequent scan of vehicles in the vehicle system at a transportation hub or railyard, the second vehicle may no longer be present. This information impacts the relationship of the vehicle system and may decrease the confidence score.

During a subsequent stop, the tracked asset may be removed from the first vehicle and scanned by a second operator. The tracked asset may then be placed onto a fourth vehicle. This stop and scan destroys the relationship between the first vehicle and the tracked asset and may decrease the confidence score. However, because of the plurality of other relationships, in addition to the new information gathered by the scan of the second operator, the asset tracking system is still able to estimate the location of the tracked asset.

The tracked asset may then be scanned leaving the transportation system and entering a distribution center. At this point, the relationship between the vehicles of the transportation center and the tracked asset are destroyed and not used to estimate the location of the tracked asset. The location of the tracked asset may then be estimated based on scanning of the tracked assets or related assets until the tracked asset arrives at a final destination.

In one example, the tracked asset is placed onto a first vehicle. The first vehicle is connected to a second vehicle, with both the first vehicle and the second vehicle being a part of the same vehicle system. A first operator having a first phone is on the vehicle system. The locations of the first vehicle, the second vehicle, the vehicle system, and the first phone can be used as the location of the tracked asset with a high confidence score so long as the relationships remain intact. Further, the relationship can be confirmed by inputs from other related assets. For instance, a wayside camera may take an image in which the first vehicle and the second vehicle are travelling together. This image, in combination with the trip plan, and the location signal from the first phone increase the weight given to the location and the confidence score because all the inputs are in agreement and confirming the relationship between the tracked asset and the related assets. Conversely, if the wayside camera image showed that the first vehicle was not travelling with the second vehicle, this input may destroy the relationship between the first vehicle and the second vehicle. As such, the confidence score may decrease.

In one example, the tracked asset is a container that is placed on a flatcar of a vehicle consist. The flatcar is in the same railcar block as a first railcar and a first locomotive. The first locomotive is operated by a first operator who tracks the stops of the railcar block into a database. The first operator's inputs into the database are compared to a predetermined trip plan. Additionally, at each stop, a wayside camera records images of the railcar block to confirm whether the flatcar, the first railcar, and the first locomotive are still travelling together as the railcar block. At each stop, the third confirmation points (e.g., the trip plan, the first operator input, and the wayside camera image) are compared. If the three inputs are all in agreement, then the confidence score for the location of the tracked asset may be high. However, if one of these three points is not in agreement, the confidence score may decrease and the asset tracking system must decide which inputs to give the most weight to. The trip plan for the railcar block has an estimated end time and location. When the railcar block arrives at the projected end location, the relationship for the railcar block moving as one is destroyed. Other relationships may then be created, such as the tracked asset container being loaded and scanned onto a truck. The location of the truck may then be tracked by subsequent scanning of the truck, by roadside cameras, by inputs from a driver of the truck, from a location signal of a mobile device of the driver, or the like. This allows location to be estimated for the tracked asset from the origin to the destination of a given trip for the tracked asset.

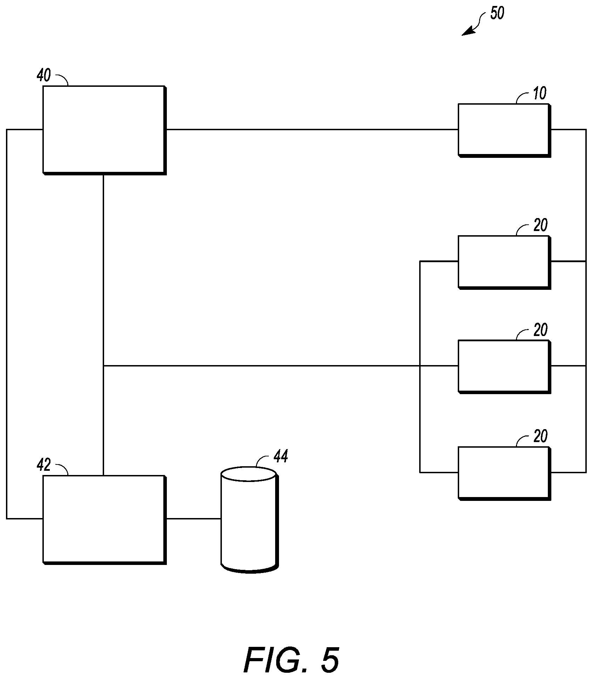

Fig. 5 illustrates one embodiment of the asset tracking system shown in Figures 1 through 4. The asset tracking system includes the controller described above. The asset tracking system also includes a communication device 42 and a memory unit 44, both the communication device and the memory unit are in communication with the controller. The memory unit may store location information, corresponding timestamps, and confidence scores of the related assets. The stored information in the memory unit may be communicated to the controller via the communication device in order to calculate the estimated location of the tracked asset. The communication device may receive and deliver signals or other communication between the controller, the memory unit, the tracked asset, and/or the related assets. The tracked asset and the one or more related assets may communicate an electrical signal to the controller via the communication device. The controller may use the received signals to identify one or more relationships between the tracked asset and the one or more related assets. The controller may also obtain locations of the related assets. Each obtained location also has a corresponding timestamp at which the location was determined. The timestamp allows the controller to evaluate how current the location information is, and thus determine how much value to place on its predictive capability. Based on this location and timestamp information, the controller may then estimate the location of the tracked asset.

The controller may calculate a confidence score for the location of the tracked asset. The confidence score is calculated based on the relationships between the tracked asset and the related assets, the timestamps at which the reported locations were determined, and a quantity of the related assets for which locations were obtained. The controller may then communicate the estimated location of the tracked asset and the confidence score that is calculated for monitoring the movement of the tracked asset.

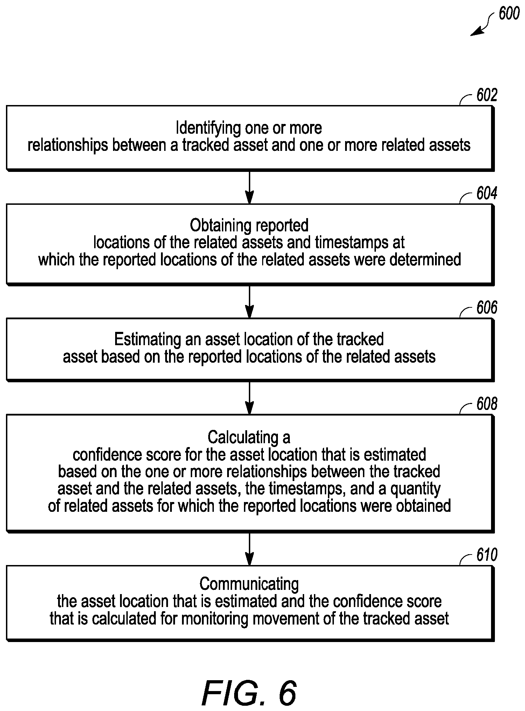

Fig. 6 illustrates a flowchart of one example of an asset tracking method 600. The method can represent operations performed by the controller of the asset tracking system. At step 602, one or more relationships between the tracked asset and the one or more related assets are identified. These relationships can be identified by the trip plan, a work list, a user input from an operator of a related asset, an image from an offboard camera showing the asset order, or the like. At step 604, reported locations of the related assets, along with timestamps at which the reported locations were determined, are obtained. The locations and timestamps can be obtained by based on a past or present location reading from the related asset such as a GPS reading, a location reading from a mobile device aboard the related asset, a location input from an operator, a stationary offboard camera, or the like. At step 606, an asset location of the tracked asset is estimated based on the reported locations of the related assets and the relationships between the tracked asset and the related asset(s). At step 608, a confidence score for the estimated asset location is calculated. The score can be calculated based on the on the relationships between the tracked asset and the related assets, the timestamps, and a quantity of related assets for which locations were obtained. For example, a value of the confidence score may increase responsive to the number of related assets increasing (or decreasing, as applicable), the number of relationships between the related assets and the tracked asset increasing (or decreasing, as applicable), the recency of the timestamps associated with the location of related assets increasing (or decreasing, as applicable), the strength of the relationship between the related asset and the tracked asset increasing (or decreasing, as applicable), and the like. At step 610, the estimated asset location and confidence score that is calculated for monitoring movement of the tracked asset can be communicated. The estimated asset location and confidence score can be communicated from the communication device to the controller, where the controller may modify function of the vehicle automatically to get the tracked asset to another location or to the scheduled location sooner or later than the currently estimated projection. The communication device may also communicate the estimated asset location and confidence score to an operator either onboard or at an offboard location. The operator can then use this information to provide an updated arrival time, modify the route of the vehicle and tracked asset, or the like. Additionally, the communication device may communicate the estimated asset location and confidence score to the memory unit for storage and use at a later time or for use on a later trip.

The asset tracking system is designed to first use trustworthy and recent information to estimate the location of the tracked asset. However, in the event these initial relationships do not generate a useful position output for the tracked asset, other relationships may also be queried. These other relationships can be useful even if they are less confident and reliable than the initial input information. For example, the asset tracking system may return a high confidence that a queried item was in a specific location twenty-four hours ago. As shown in Fig. 1, the device which represents the RFID chip in the first vehicle was located on track 100 twenty-four hours ago. The tracked asset was scheduled to be a part of the block with the related asset, the first vehicle for the given trip based on the trip planner. These inputs provide an initial high confidence that the tracked asset should be in the estimated location. However, as shown in Fig. 4, the related asset, the first vehicle continued on track 100 and the tracked asset split and is now travelling on track 300. Thus, the initial relationships used did not provide a useful position output. Instead, the system uses other additional inputs, such as images from the railyard and/or information manually input from railyard workers to provide a more up-to-date and accurate estimation of the location of the tracked asset. While the location signal from the RFID chip in combination with the trip plan is the most objectively trustworthy and reliable information, it was compared with the railyard images and/or manual inputs to output the most reliable location estimate.

This is an additional benefit of the asset tracking system: it allows use of inputs that may otherwise be too unreliable to provide a tangible benefit. That is, with a plurality of inputs, the system allows for the admission of sources that are less reliable or trustworthy because the system is able to compare these inputs with other, more reliable inputs. If the less reliable input agrees with the more reliable input, it allows the system to better triangulate the location of the tracked asset. Conversely, if multiple inputs with low reliability all estimate a slightly different location of the tracked asset, the system is able to triangulate these multiple inputs to better estimate the location of the tracked asset.

Additionally, in a worst-case scenario no accurate current location can be predicted and the tracked asset may be lost. In these situations, the asset tracking system is still beneficial and can be used to determine a last known location. This last known location can then be used as the starting point to locate the tracked asset.

An exemplary embodiment the confidence score is calculated by using one or more weighting factors associated with the one or more relationships between the tracked asset and the one or more related assets. A value of the one or more weighting factors may increase for spatially closer relationships between the tracked asset and the one or more related assets. The value of the confidence score increases as the quantity of the one or more related assets increases and the value of the confidence score decreases as the quantity of the one or more related assets decreases wherein the value of the confidence score increases as a time between the one or more timestamps and a current time decreases and the value of the confidence score decreases as the time between the one or more timestamps and the current time increases.

The controller may increase the value of the confidence score as the quantity of the one or more related assets increases and decrease the value of the confidence score as the quantity of the one or more related assets decreases. The controller may increase the value of the confidence score as a time between the one or more timestamps and a current time decreases and the controller may decrease the value of the confidence score as the time between the one or more timestamps and the current time increases. The controller may identify a vehicle system in which the tracked asset is disposed based on the location of tracked asset that is estimated and the confidence score that is calculated. The controller may alter the movement of the tracked assets and the related assets in exemplary embodiments where the present disclosure is adapted to vehicle systems or other controllable mobile machines based on identifying the tracked asset being within such a system.

Confidence score at a given time $C(t)$ is calculated based on the number of factors contributing to confidence score N, confidences score contribution from factor i $C_i$, weightage of factor i $W_i$, initial value of confidence score for contributing factor i $s_i$, decay factor for contributing factor i $\lambda_i$, and time constant after which confidence score decay starts for factor i $\alpha_i$.

$$C(t) = \frac{\sum_{i=1}^{N}(W_i * C_i)}{N}$$

$$C_i = s_i \qquad\qquad 0 < t < \alpha_i$$

$$C_i = s_i e^{-\lambda_i * t} \qquad\qquad t > \alpha_i$$

The confidence score may be calculated by using one or more weighting factors associated with the one or more relationships between the tracked asset and the one or more related assets. A value of the one or more weighting factors increases for spatially closer relationships between the tracked asset and the one or more related assets. The value of the confidence score increases as the quantity of the one or more related assets increases and the value of the confidence score decreases as the quantity of the one or more related assets decreases. The value of the confidence score increases as a time between the one or more timestamps and a current time decreases and the value of the confidence score decreases as the time between the one or more timestamps and the current time increases.

In some examples, the scores and values in the above formula or empirically derived. However, in other examples, control systems can be established to automatically calculate the given scores and values, such as by machine learning or artificial intelligence.

In one embodiment, the control system may have a local data collection system deployed that may use machine learning to enable derivation-based learning outcomes. The controller may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for vehicle performance and behavior analytics, and the like.

In one embodiment, the control system may include a policy engine that may apply one or more policies. These policies may be based at least in part on characteristics of a given asset or environment. With respect to control policies, a neural network can receive input of a number of environmental and task-related parameters. These parameters may include an identification of a determined trip plan for a vehicle group, data from various sensors, and location and/or position data. The neural network can be trained to generate an output based on these inputs, with the output representing an action or sequence of actions that the vehicle group should take to accomplish the trip plan. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

One embodiment may further comprise identifying a vehicle system in which the tracked asset is disposed based on the asset location that is estimated and the confidence score that is calculated; and changing movement of the vehicle system based on identifying the tracked asset being within the vehicle system.

In accordance with one example or aspect, a method is provided that may include tracking one or more related assets to estimate an asset location and assigning a confidence score for the estimated asset location. The method may include first identifying one or more relationships between a tracked asset and one or more related assets then obtaining one or more reported locations of the one or more related assets and one or more timestamps at which the one or more reported locations of the one or more related assets were determined. The method may include estimating an asset location of the tracked asset based on the one or more reported locations of the one or more related assets and determining or calculating a confidence score for the asset location that is estimated based on the one or more relationships between the tracked asset and the one or more related assets, the one or more timestamps at which the one or more reported locations were determined, and a quantity of the one or more related assets for which the one or more reported locations were obtained. The method may also include communicating the asset location that is estimated and the confidence score that is calculated for monitoring movement of the tracked asset.

The confidence score may be calculated by using one or more weighting factors associated with the one or more relationships between the tracked asset and the one or more related assets. A value of the one or more weighting factors may increase for spatially closer relationships between the tracked asset and the one or more related assets. The one or more related assets may include one or more of a mobile phone carried by a crew member of a first vehicle, a first multi-vehicle system that is planned to include the tracked asset, a vehicle block of two or more vehicles that are planned to remain together during travel in two or more different second multi-vehicle systems, a propulsion-generating vehicle, a non-propulsion-generating vehicle, a container carried by the tracked asset, or cargo carried in the container by the tracked asset. The method may include identifying a disruption in a first relationship of the one or more relationships, the first relationship between a first related asset of the one or more related assets and the tracked asset and eliminating the first relationship from use in estimating the asset location and determining or calculating the confidence score responsive to identifying the disruption in the first relationship. The disruption in the first relationship may be identified responsive to receiving a first signal indicating that the tracked asset or the first related asset is taken out of service, or by receiving a second signal indicating that a sensor did not detect the tracked asset and the first related asset moving together. Or receiving inconsistent reported locations from the first related asset and the tracked asset. Or determining that a scheduled trip of the first related asset and the tracked asset has ended. The value of the confidence score may increase as the quantity of the one or more related assets increases. The value of the confidence score may decrease as the quantity of the one or more related assets decreases. The value of the confidence score may increase as a time between the one or more timestamps and a current time decreases. The value confidence score may decrease as the time between the one or more timestamps and the current time increases.

The method may include identifying a vehicle system in which the tracked asset is disposed based on the asset location that is estimated and the confidence score that is calculated and changing movement of the vehicle system based on identifying the tracked asset being within the vehicle system. In one embodiment, the system and method does not use a confidence score per se, but rather a binary value to indicate a coupling or a coupled state between assets or a non-coupled or uncoupled state. In this case, for ease of terminology, coupled assets would equate to a "high confidence score" and uncoupled assets would equate to a "low confidence score". Accordingly, the term "confidence score" is not limited to a mere scoring system or a graduated weighting value in all embodiments.

In accordance with one example or aspect, an asset tracking system is provided that includes a controller that may identify one or more relationships between a tracked asset and one or more related assets. The controller may obtain one or more reported locations of the one or more related assets and one or more timestamps at which the one or more reported locations of the one or more related assets were determined. The controller may estimate an asset location of the tracked asset based on the one or more reported locations of the one or more related assets. The controller may calculate a confidence score for the asset location that is estimated based on the one or more relationships between the tracked asset and the one or more related assets, the one or more timestamps at which the one or more reported locations were determined, and a quantity of the one or more related assets for which the one or more reported locations were obtained. The controller may communicate the asset location that is estimated and the confidence score that is calculated for monitoring movement of the tracked asset.

The controller may calculate the confidence score using one or more weighting factors associated with the one or more relationships between the tracked asset and the one or more related assets. The controller may calculate a value of the one or more weighting factors that may increase for spatially closer relationships between the tracked asset and the one or more related assets. The one or more related assets may include one or more of a mobile phone carried by a crew member of a first vehicle, a first multi-vehicle system that is planned to include the tracked asset, a vehicle block of two or more vehicles that are planned to remain together during travel in two or more different second multi-vehicle systems, a propulsion-generating vehicle, a non-propulsion-generating vehicle, a container carried by the tracked asset, or cargo carried in the container by the tracked asset.

The controller may identify a disruption in a first relationship of the one or more relationships, the first relationship between a first related asset of the one or more related assets and the tracked asset. The controller also may eliminate the first relationship from use in estimating the asset location and determining or calculating the confidence score responsive to identifying the disruption in the first relationship. The controller may identify the disruption in the first relationship responsive to receiving a first signal indicating that the tracked asset or the first related asset is taken out of service, receiving a second signal indicating that a sensor did not detect the tracked asset and the first related asset moving together, receiving inconsistent reported locations from the first related asset and the tracked asset, or determining that a scheduled trip of the first related asset and the tracked asset has ended. The controller may increase the value of the confidence score as the quantity of the one or more related assets increases and may decrease the value of the confidence score as the quantity of the one or more related assets decreases.

The controller may increase the value of the confidence score as a time between the one or more timestamps and a current time decreases. The controller may decrease the value of the confidence score as the time between the one or more timestamps and the current time increases. The controller may identify a vehicle system in which the tracked asset is disposed based on the asset location that is estimated and the confidence score that is calculated. The controller may change movement of the vehicle system based on identifying the tracked asset being within the vehicle system.

In accordance with one example or aspect, an asset tracking system includes a controller that may receive information related to a tracked asset from one or more related assets. The information may include one or more reported locations of the related assets and one or more timestamps at which the reported locations were determined. The controller may identify one or more relationships between the tracked asset and the one or more related assets. The controller may estimate an asset location of the tracked asset based on the one or more reported locations of the related assets. The controller may calculate a confidence score for the asset location that is estimated based on the relationships between the tracked asset and the related assets, the one or more timestamps at which the one or more reported locations were determined, and a quantity of the one or more related assets for which the one or more reported locations were obtained. The controller may communicate the asset location that is estimated and the confidence score that is calculated for monitoring movement of the tracked asset.

The system may include the controller, which may determine or calculate a second confidence score for the location of the related assets based on the one or more reported locations and the one or more timestamps at which the one or more reported locations were determined. Reported locations of the related asset with higher second confidence scores are weighted more heavily in determining the tracked asset location.

As used herein, an element or step recited in the singular and proceeded with the word "a" or "an" do not exclude the plural of said elements or operations, unless such exclusion is explicitly stated. Furthermore, references to "one embodiment" of the invention do not exclude the existence of additional embodiments that incorporate the recited features. Moreover, unless explicitly stated to the contrary, embodiments "comprising," "comprises," "including," "includes," "having," or "has" an element or a plurality of elements having a particular property may include additional such elements not having that property. In the appended claims, the terms "including" and "in which" are used as the plain-English equivalents of the respective terms "comprising" and "wherein." Moreover, in the following clauses, the terms "first," "second," and "third," etc. are used merely as labels, and do not impose numerical requirements on their objects.

The above description is illustrative, and not restrictive. For example, the above-described embodiments (and/or aspects thereof) may be used in combination with each other. In addition, many modifications may be made to adapt a particular situation or material to the teachings of the subject matter without departing from its scope. While the dimensions and types of materials described herein define the parameters of the subject matter, they are exemplary embodiments. Other embodiments will be apparent to one of ordinary skill in the art upon reviewing the above description. The scope of the subject matter should, therefore, be determined with reference to the appended claims, along with the full scope of equivalents to which such clauses are entitled.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method implemented by an asset tracking system comprising a controller, the method comprising:

   identifying one or more relationships between a tracked asset disposed on a vehicle system and one or more related assets;
   obtaining one or more reported locations of the one or more related assets, using one or more sensors, and one or more timestamps at which the one or more reported locations of the one or more related assets were determined;
   estimating an asset location of the tracked asset based at least in part on the one or more reported locations of the one or more related assets;
   determining a confidence score for the asset location that is estimated based at least in part on the one or more relationships between the tracked asset and the one or more related assets, the one or more timestamps at which the one or more reported locations were determined, and a quantity of the one or more related assets for which the one or more reported locations were obtained; and
   communicating the asset location that is estimated and the confidence score that is determined;
   modify a function of the vehicle system based at least in part on the asset location that is estimated and the confidence score that is determined to change a planned movement of the tracked asset.

2. The method of claim 1, wherein the confidence score is determined by using one or more weighting factors associated with the one or more relationships between the tracked asset and the one or more related assets.

3. The method of claim 2, wherein a value of the one or more weighting factors increases for spatially closer relationships between the tracked asset and the one or more related assets.

4. The method of claim 1, wherein the one or more related assets include one or more of a mobile phone carried by a crew member of a first vehicle, a first multi-vehicle system that is planned to include the tracked asset, a vehicle block of two or more vehicles that are planned to remain together during travel in two or more different second multi-vehicle systems, a propulsion-generating vehicle, a non-propulsion-generating vehicle, a container carried by the tracked asset, or cargo carried in the container by the tracked asset.

5. The method of claim 1, further comprising:

   identifying a disruption in a first relationship of the one or more relationships, the first relationship between a first related asset of the one or more related assets and the tracked asset; and eliminating the first relationship from use in estimating the asset location and determining the confidence score responsive to identifying the disruption in the first relationship.

6. The method of claim 5, wherein the disruption in the first relationship is identified responsive to one or more of receiving a first signal indicating that the tracked asset or the first related asset is taken out of service, receiving a second signal indicating that a sensor did not detect the tracked asset and the first related asset moving together, receiving inconsistent reported locations from the first related asset and the tracked asset, or determining that a scheduled trip of the first related asset and the tracked asset has ended.

7. The method of claim 1, wherein the confidence score increases as the quantity of the one or more related assets increases and the confidence score decreases as the quantity of the one or more related assets decreases.

8. The method of claim 1, wherein the confidence score increases as a time between the one or more timestamps and a current time decreases and the value of the confidence score decreases as the time between the one or more timestamps and the current time increases.

9. A system, comprising:
   a controller configured to identify one or more relationships between a tracked asset disposed on a vehicle system and one or more related assets, the controller also configured to obtain one or more reported locations of the one or more related assets and one or more timestamps at which the one or more reported locations of the one or more related assets were determined,
   **characterized in that** :

   the controller configured to estimate an asset location of the tracked asset based at least in part on the one or more reported locations of the one or more related assets, wherein
   the controller configured to determine a confidence score for the asset location that is estimated based at least in part on the one or more relationships between the tracked asset and the one or more related assets, the one or more timestamps at which the one or more reported locations were determined, and a quantity of the one or more related assets for which the one or more reported locations were obtained,
   the controller configured to communicate the asset location that is estimated and the confidence score that is determined, and wherein the controller configured to modify a function of the vehicle system based at least in part on the asset location that is estimated and the confidence score that is determined to change a planned movement of the tracked asset.

10. The system of claim 9, wherein the controller is configured to determine the confidence score using one or more weighting factors associated with the one or more relationships between the tracked asset and the one or more related assets.

11. The system of claim 10, wherein the controller is configured to determine a value of the one or more weighting factors that increases for spatially closer relationships between the tracked asset and the one or more related assets.

12. The system of claim 9, wherein the one or more related assets include one or more of a mobile phone carried by a crew member of a first vehicle, a first multi-vehicle system that is planned to include the tracked asset, a vehicle block of two or more vehicles that are planned to remain together during travel in two or more different second multi-vehicle systems, a propulsion-generating vehicle, a non-propulsion-generating vehicle, a container carried by the tracked asset, or cargo carried in the container by the tracked asset.

13. The system of claim 9, wherein the controller is configured to identify a disruption in a first relationship of the one or more relationships, the first relationship between a first related asset of the one or more related assets and the tracked asset, the controller also configured to eliminate the first relationship from use in estimating the asset location and determining the confidence score responsive to identifying the disruption in the first relationship.

14. The system of claim 13, wherein the controller is configured to identify the disruption in the first relationship responsive to receiving a first signal indicating that the tracked asset or the first related asset is taken out of service, receiving a second signal indicating that a sensor did not detect the tracked asset and the first related asset moving together, receiving inconsistent reported locations from the first related asset and the tracked asset, or determining that a scheduled trip of the first related asset and the tracked asset has ended.

**Patentansprüche**

1. Verfahren, das von einem Postenverfolgungssystem implementiert wird, das eine Steuerung umfasst, wobei das Verfahren umfasst:

   Identifizieren einer oder mehrerer Beziehungen zwischen einem verfolgten Posten, der auf einem Fahrzeugsystem angeordnet ist, und einem oder mehreren zugehörigen Posten;
   Erhalten einer oder mehrerer gemeldeter Positionen der einen oder mehreren zugehörigen Posten unter Verwendung eines oder mehrerer Sensoren und eines oder mehrerer Zeitstempel, zu denen die eine oder mehreren gemeldeten Positionen der einen oder mehreren zugehörigen Posten bestimmt wurden;
   Schätzen einer Postenposition des verfolgten Posten basierend mindestens teilweise auf den ein oder mehreren gemeldeten Positionen der ein oder mehreren zugehörigen Posten;
   Bestimmen eines Konfidenzwerts für die Postenposition, der mindestens teilweise basierend auf der einen oder den mehreren Beziehungen zwischen dem verfolgten Posten und der einen oder den mehreren zugehörigen Posten, dem einen oder den mehreren Zeitstempeln, zu denen die eine oder die mehreren gemeldeten Positionen bestimmt wurden, und einer Anzahl des einen oder der mehreren zugehörigen Posten, für die die eine oder die mehreren gemeldeten Positionen erhalten wurden, geschätzt wird; und
   Übermitteln der Postenposition, die geschätzt wird, und des Konfidenzwerts, der bestimmt wurde;
   Modifizieren einer Funktion des Fahrzeugsystems basierend mindestens teilweise auf der Postenposition, die geschätzt wird, und dem Konfidenzwert, der bestimmt wird, um eine geplante Bewegung des verfolgten Posten zu ändern.

2. Verfahren nach Anspruch 1, wobei der Konfidenzwert durch Verwendung eines oder mehrerer Gewichtungsfaktoren bestimmt wird, die mit der einen oder den mehreren Beziehungen zwischen dem verfolgten Posten und dem einen oder den mehreren zugehörigen Posten assoziiert sind.

3. Verfahren nach Anspruch 2, wobei ein Wert des einen oder der mehreren Gewichtungsfaktoren für räumlich nähere Beziehungen zwischen dem verfolgten Posten und dem einen oder den mehreren zugehörigen Posten zunimmt.

4. Verfahren nach Anspruch 1, wobei die eine oder die mehreren zugehörigen Posten eines oder mehrere von einem Mobiltelefon, das von einem Besatzungsmitglied eines ersten Fahrzeugs getragen wird, einem ersten Mehrfahrzeugsystem, das planmäßig den verfolgten Posten einschließen soll, einem Fahrzeugblock von zwei oder mehr Fahrzeugen, die planmäßig während der Fahrt in zwei oder mehr verschiedenen zweiten Mehrfahrzeugsystemen zusammenbleiben sollen, einem antriebserzeugenden Fahrzeug, einem nicht-antriebserzeugenden Fahrzeug, einem Container, der von dem verfolgten Posten getragen wird, oder Fracht, die in dem Container von dem verfolgten Posten getragen wird, einschließen.

5. Verfahren nach Anspruch 1, ferner umfassend:

   Identifizieren einer Störung in einer ersten Beziehung der einen oder mehreren Beziehungen, wobei die erste Beziehung zwischen einem ersten zugehörigen Posten des einen oder der mehreren zugehörigen Posten und dem verfolgten Posten besteht; und
   Eliminieren der ersten Beziehung von der Verwendung beim Schätzen der Postenposition und Bestimmen des Konfidenzwerts als Reaktion auf das Identifizieren der Störung in der ersten Beziehung.

6. Verfahren nach Anspruch 5, wobei die Störung in der ersten Beziehung als Reaktion auf eines oder mehrere der folgenden identifiziert wird: Empfangen eines ersten Signals, das anzeigt, dass der verfolgte Posten oder der erste zugehörige Posten außer Betrieb genommen wird, Empfangen eines zweiten Signals, das anzeigt, dass ein Sensor nicht erkannt hat, dass sich der zugehörige Posten und der erste zugehörige Posten zusammen bewegen, Empfangen inkonsistenter gemeldeter Positionen von dem ersten zugehörigen Posten und dem verfolgten Posten, oder Bestimmen, dass eine geplante Fahrt des ersten zugehörigen Posten und des verfolgten Posten beendet wurde.

7. Verfahren nach Anspruch 1, wobei der Konfidenzwert zunimmt, wenn die Anzahl des einen oder der mehreren zugehörigen Posten zunimmt, und der Konfidenzwert abnimmt, wenn die Anzahl des einen oder der mehreren zugehörigen Posten abnimmt.

8. Verfahren nach Anspruch 1, wobei der Konfidenzwert zunimmt, wenn eine Zeit zwischen dem einen oder den mehreren Zeitstempeln und einer aktuellen Zeit abnimmt, und der Wert des Konfidenzwerts abnimmt, wenn die Zeit zwischen dem einen oder den mehreren Zeitstempeln und der aktuellen Zeit zunimmt.

9. System umfassend:

eine Steuerung, die konfiguriert ist, um eine oder mehrere Beziehungen zwischen einem verfolgten Posten, der auf einem Fahrzeugsystem angeordnet ist, und einem oder mehreren zugehörigen Posten zu identifizieren, wobei die Steuerung auch konfiguriert ist, um einen oder mehrere gemeldete Positionen des einen oder der mehreren zugehörigen Posten und einen oder mehrere Zeitstempel, zu denen der eine oder die mehreren gemeldeten Positionen des einen oder der mehreren zugehörigen Posten bestimmt wurden, zu erhalten,

**gekennzeichnet durch:**

die Steuerung, die konfiguriert ist, um eine Postenposition des verfolgten Posten mindestens teilweise basierend auf der einen oder den mehreren gemeldeten Positionen der einen oder der mehreren zugehörigen Posten zu schätzen, wobei die Steuerung konfiguriert ist, um einen Konfidenzwert für die Postenposition zu bestimmen, der mindestens teilweise basierend auf der einen oder den mehreren Beziehungen zwischen dem verfolgten Posten und der einen oder den mehreren zugehörigen Posten, dem einen oder den mehreren Zeitstempeln, zu denen die eine oder die mehreren gemeldeten Positionen bestimmt wurden, und einer Anzahl der einen oder mehreren zugehörigen Posten, für die die eine oder die mehreren gemeldeten Positionen erhalten wurden, geschätzt wird, die Steuerung, die konfiguriert ist, um die Postenposition, die bestimmt wird, und der bestimmte Konfidenzwert, der bestimmt wird, und wobei die Steuerung, die konfiguriert ist, um eine Funktion des Fahrzeugsystems basierend mindestens teilweise auf der geschätzten Postenposition und dem bestimmten Konfidenzwert zu modifizieren, um eine geplante Bewegung des verfolgten Posten zu ändern.

10. System nach Anspruch 9, wobei die Steuerung konfiguriert ist, um den Konfidenzwert unter Verwendung eines oder mehrerer Gewichtungsfaktoren zu bestimmen, die mit der einen oder den mehreren Beziehungen zwischen dem verfolgten Posten und dem einen oder den mehreren zugehörigen Posten assoziiert sind.

11. System nach Anspruch 10, wobei die Steuerung konfiguriert ist, um einen Wert des einen oder der mehreren Gewichtungsfaktoren zu bestimmen, der für räumlich nähere Beziehungen zwischen dem verfolgten Posten und dem einen oder den mehreren zugehörigen Posten zunimmt.

12. System nach Anspruch 9, wobei der eine oder die mehreren zugehörigen Posten ein oder mehrere von einem Mobiltelefon, das von einem Besatzungsmitglied eines ersten Fahrzeugs getragen wird, einem ersten Mehrfahrzeugsystem, das planmäßig den verfolgten Posten einschließen soll, einem Fahrzeugblock von zwei oder mehr Fahrzeugen, die planmäßig während der Fahrt in zwei oder mehr verschiedenen zweiten Mehrfahrzeugsystemen zusammenbleiben sollen, einem antriebserzeugenden Fahrzeug, einem nicht-antriebserzeugenden Fahrzeug, einem Container, der von dem verfolgten Posten getragen wird, oder Fracht, die in dem Container von dem verfolgten Posten getragen wird, einschließen.

13. System nach Anspruch 9, wobei die Steuerung konfiguriert ist, um eine Störung in einer ersten Beziehung der einen oder mehreren Beziehungen zu identifizieren, wobei die erste Beziehung zwischen einem ersten zugehörigen Posten dem einen oder den mehreren zugehörigen Posten und dem verfolgten Posten besteht, wobei die Steuerung auch konfiguriert ist, um die erste Beziehung von der Verwendung beim Schätzen der Postenposition und dem Bestimmen des Konfidenzwerts als Reaktion auf das Identifizieren der Störung in der ersten Beziehung auszuschließen.

14. System nach Anspruch 13, wobei die Steuerung konfiguriert ist, um die Störung in der ersten Beziehung zu identifizieren als Reaktion auf den Empfang eines ersten Signals, das anzeigt, dass der verfolgte Posten oder der erste zugehörige Posten außer Betrieb genommen wird, den Empfang eines zweiten Signals, das anzeigt, dass ein Sensor den verfolgten Posten und den ersten zugehörigen Posten nicht als sich zusammen bewegend erkannt hat, den Empfang inkonsistenter gemeldeter Positionen von dem ersten zugehörigen Posten und dem verfolgten Posten, oder das Bestimmen, dass eine geplante Fahrt des ersten zugehörigen Posten und des verfolgten Posten beendet wurde.

**Revendications**

1. Procédé mis en œuvre par un système de suivi de bien comprenant un dispositif de commande, le procédé comprenant :

l'identification d'une ou plusieurs relations entre un bien suivi disposé sur un système de véhicule et un ou plusieurs biens connexes ; l'obtention d'un ou plusieurs emplacements signalés du ou des biens connexes, à l'aide d'un ou plusieurs capteurs, et d'un ou plusieurs horodatages auxquels le ou les emplacements signalés du ou des biens connexes ont été déterminés ;

l'estimation d'un emplacement de bien du bien suivi sur la base, au moins en partie, du ou des emplacements signalés du ou des biens connexes ;

la détermination d'un indice de confiance pour l'emplacement de bien, qui est estimé sur la base, au moins en partie, de la ou des relations entre le bien suivi et le ou les biens connexes, du ou des horodatages auxquels le ou les emplacements signalés ont été déterminés, et d'une quantité du ou des biens connexes pour lesquels le ou les emplacements signalés ont été obtenus ; et

la communication de l'emplacement de bien qui est estimé et du degré de confiance qui est déterminé ;

la modification d'une fonction du système de véhicule sur la base, au moins en partie, de l'emplacement de bien qui est estimé et de l'indice de confiance qui est déterminé, afin de modifier un mouvement prévu du bien suivi.

2. Procédé selon la revendication 1, dans lequel l'indice de confiance est déterminé en utilisant un ou plusieurs facteurs de pondération associés à la ou aux relations entre le bien suivi et le ou les biens connexes.

3. Procédé selon la revendication 2, dans lequel une valeur du ou des facteurs de pondération augmente pour des relations spatiales plus rapprochées entre le bien suivi et le ou les biens connexes.

4. Procédé selon la revendication 1, dans lequel le ou les biens connexes comportent l'un ou plusieurs parmi un téléphone mobile transporté par un membre d'équipage d'un premier véhicule, un premier système multi-véhicule qui est prévu pour inclure le bien suivi, un bloc de véhicules de deux véhicules, ou plus, qui sont prévus pour rester ensemble pendant un déplacement dans deux seconds systèmes multi-véhicule différents, ou plus, un véhicule générateur de propulsion, un véhicule non générateur de propulsion, un récipient transporté par le bien suivi, ou une cargaison transportée dans le récipient par le bien suivi.

5. Procédé selon la revendication 1, comprenant en outre :

l'identification d'une perturbation dans une première relation de la ou des relations, la première relation étant entre un premier bien connexe du ou des biens connexes et le bien suivi ; et l'élimination de l'utilisation de la première relation dans l'estimation de l'emplacement de bien et la détermination de l'indice de confiance en réponse à l'identification de la perturbation dans la première relation.

6. Procédé selon la revendication 5, dans lequel la perturbation dans la première relation est identifiée en réponse à l'une ou plusieurs parmi la réception d'un premier signal indiquant que le bien suivi ou le premier bien connexe est mis hors service, la réception d'un second signal indiquant qu'un capteur n'a pas détecté le bien suivi et le premier bien connexe se déplaçant ensemble, la réception de positions signalées incohérentes du premier bien connexe et du bien suivi, ou la détermination qu'un voyage programmé du premier bien connexe et du bien suivi a pris fin.

7. Procédé selon la revendication 1, dans lequel l'indice de confiance augmente à mesure que la quantité du ou des biens connexes augmente et l'indice de confiance diminue à mesure que la quantité du ou des biens connexes diminue.

8. Procédé selon la revendication 1, dans lequel l'indice de confiance augmente à mesure qu'un temps écoulé entre le ou les horodatages et une heure actuelle diminue et la valeur de l'indice de confiance diminue à mesure que le temps écoulé entre le ou les horodatages et l'heure actuelle augmente.

9. Système, comprenant :

un dispositif de commande configuré pour identifier une ou plusieurs relations entre un bien suivi disposé sur un système de véhicule et un ou plusieurs biens connexes, le dispositif de commande étant également configuré pour obtenir un ou plusieurs emplacements signalés du ou des biens connexes et un ou plusieurs horodatages auxquels le ou les emplacements signalés du ou des biens connexes ont été déterminés,

**caractérisé en ce que :**

le dispositif de commande est configuré pour estimer un emplacement de bien du bien suivi sur la base, au moins en partie, du ou des emplacements signalés du ou des biens connexes, dans lequel le dispositif de commande est configuré pour déterminer un indice de confiance pour l'emplacement de bien qui est estimé sur la base, au moins en partie, de la ou des relations entre le bien suivi et le ou les biens connexes, du ou des horodatages auxquels le ou les emplacements signalés ont été déterminés, et d'une quantité du ou des biens connexes pour lesquels le ou les emplacements signalés ont été obtenus,

le dispositif de commande est configuré pour communiquer l'emplacement de bien qui est estimé et l'indice de confiance qui est déterminé, et dans lequel

le dispositif de commande est configuré pour modifier une fonction du système de véhicule sur la base, au moins en partie, de l'emplacement de bien qui est estimé et de l'indice de confiance qui est déterminé, afin de modifier un mouvement prévu du bien suivi.

**10.** Système selon la revendication 9, dans lequel le dispositif de commande est configuré pour déterminer l'indice de confiance à l'aide d'un ou plusieurs facteurs de pondération associés à la ou aux relations entre le bien suivi et le ou les biens connexes.

**11.** Système selon la revendication 10, dans lequel le dispositif de commande est configuré pour déterminer une valeur du ou des facteurs de pondération qui augmente pour des relations spatiales plus rapprochées entre le bien suivi et le ou les biens connexes.

**12.** Système selon la revendication 9, dans lequel le ou les biens connexes comportent l'un ou plusieurs parmi un téléphone mobile transporté par un membre d'équipage d'un premier véhicule, un premier système multi-véhicule qui est prévu pour inclure le bien suivi, un bloc de véhicules de deux véhicules, ou plus, qui sont prévus pour rester ensemble pendant un déplacement dans deux seconds systèmes multi-véhicule différents, ou plus, un véhicule générateur de propulsion, un véhicule non générateur de propulsion, un récipient transporté par le bien suivi, ou une cargaison transportée dans le récipient par le bien suivi.

**13.** Système selon la revendication 9, dans lequel le dispositif de commande est configuré pour identifier une perturbation dans une première relation de la ou des relations, la première relation étant entre un premier bien connexe du ou des biens connexes et le bien suivi, le dispositif de commande étant également configuré pour éliminer l'utilisation de la première relation dans l'estimation de l'emplacement de bien et la détermination de l'indice de confiance en réponse à l'identification de la perturbation dans la première relation.

**14.** Système selon la revendication 13, dans lequel le dispositif de commande est configuré pour identifier la perturbation dans la première relation en réponse à la réception d'un premier signal indiquant que le bien suivi ou le premier bien connexe est mis hors service, à la réception d'un second signal indiquant qu'un capteur n'a pas détecté le bien suivi et le premier bien connexe se déplaçant ensemble, à la réception de positions signalées incohérentes du premier bien connexe et du bien suivi, ou à la détermination de la fin d'un voyage programmé du premier bien connexe et du bien suivi.

FIG. 1

FIG. 2

*FIG. 3*

FIG. 4

FIG. 5

_600

_602

Identifying one or more
relationships between a tracked asset and one or more related assets

_604

Obtaining reported
locations of the related assets and timestamps at
which the reported locations of the related assets were determined

_606

Estimating an asset location of the tracked
asset based on the reported locations of the related assets

_608

Calculating a
confidence score for the asset location that is estimated
based on the one or more relationships between the tracked
asset and the related assets, the timestamps, and a quantity
of related assets for which the reported locations were obtained

_610

Communicating
the asset location that is estimated and the confidence score
that is calculated for monitoring movement of the tracked asset

*FIG. 6*

**EP 4 239 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021142268 A1

- WO 2017127743 A1